(19) Europäisches Patentamt
European Patent Office
Office européen des brevets

(11) EP 1 323 768 B1

(12) EUROPÄISCHE PATENTSCHRIFT

(45) Veröffentlichungstag und Bekanntmachung des Hinweises auf die Patenterteilung:
**26.01.2005 Patentblatt 2005/04**

(51) Int Cl.⁷: **C08G 77/50**, C09D 183/04

(21) Anmeldenummer: **02026494.1**

(22) Anmeldetag: **28.11.2002**

# (54) Alkenylgruppen aufweisende Siloxancopolymere als Antimisting Additive für Siliconbeschichtungszusammensetzungen

Alkenylgroup containing polysiloxane copolymers and their use as anti-misting additives for silicone coating compositions

Copolymères polysiloxane contenant des groupes alkényles et leur utilisation comme agents anti-aérosol dans des compositions de revêtement de silicone

(84) Benannte Vertragsstaaten:
**BE DE FR GB NL**

(30) Priorität: **13.12.2001 DE 10161334**

(43) Veröffentlichungstag der Anmeldung:
**02.07.2003 Patentblatt 2003/27**

(73) Patentinhaber: **Wacker-Chemie GmbH**
**81737 München (DE)**

(72) Erfinder:
- **Herzig, Christian, Dr.**
  **83329 Feichten (DE)**
- **Lautenschlager, Hans, Dr.**
  **85433 Haiming (DE)**
- **Blöchl, Martina**
  **84367 Reut (DE)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:

| | |
|---|---|
| **EP-B- 0 523 660** | **EP-B- 1 008 615** |
| **WO-A-01/98420** | **DE-A- 19 522 144** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung von Antimisting Additiven zur Reduktion der Aerosolbildung in vernetzbaren Siliconbeschichtungszusammensetzungen.

Ein Trend in der Siliconbeschichtungsindustrie ist die Erhöhung der Maschinengeschwindigkeit zur Steigerung der Produktivität. Werden Siliconbeschichtungen auf das Substrat bei höheren Geschwindigkeiten, beispielsweise von über 300 m/min, aufgebracht, können sich feine Sprühnebel des Siliconbeschichtungssystems bilden. Dieses Aerosol entsteht am Siliconauftragswerk. Diese Sprühnebelbildung erweist sich als ein ernstes Problem bei der weiteren Steigerung der Beschichtungsgeschwindigkeit.

Diese Sprühnebelbildung kann durch den Zusatz von sogenannten Antimisting Additiven zum Siliconbeschichtungssystem reduziert werden.

In EP-A 716 115 (Dow Corning Corp.) werden Antimisting Additive, die durch Reaktion einer Organosiliciumverbindung, einer Oxyalkylengruppen enthaltender Verbindung und eines Katalysators erhalten werden, beschrieben. Durch die Zugabe dieser Oxyalkylengruppen aufweisenden Umsetzungsprodukte zu vernetzbaren Siliconbeschichtungssystemen wird die Bildung von Aerosol in schnellen Beschichtungsprozessen reduziert.

In US-A 6,265,497 (Wacker-Chemie GmbH) sind Alkenylgruppen aufweisende Siloxancopolymere beschrieben, die verzweigt sind und worin die Organopolysiloxanblöcke über Kohlenwasserstoffbrücken verbunden sind.

Es bestand die Aufgabe Antimisting Additive für Siliconbeschichtungszusammensetzungen bereitzustellen, die die Aerosolbildung in schnellen Beschichtungsprozessen reduzieren, die mit den Siliconbeschichtungszusammensetzungen gut mischbar sind und die die Siliconbeschichtungszusammensetzungen nicht beeinträchtigen. Die Aufgabe wird durch die Erfindung gelöst.

Gegenstand der Erfindung ist die Verwendung von Antimisting Additiven in vernetzbaren Siliconbeschichtungszusammensetzungen zur Reduktion der Aerosolbildung, dadurch gekennzeichnet, dass als Antimisting Additive Alkenylgruppen aufweisende Siloxancopolymere herstellbar, indem
in einem ersten Schritt
eine mindestens drei aliphatische Doppelbindungen aufweisende Verbindung (1) der allgemeinen Formel

$$R^2(CR^3{=}CH_2)_x \qquad \text{(I)}$$

wobei $R^2$ einen dreiwertigen oder vierwertigen Kohlenwasserstoffrest mit vorzugsweise 1 bis 25 Kohlenstoffatomen je Rest, der ein oder mehrere von einander separate Heteroatome ausgewählt aus der Gruppe von Sauerstoff, Silizium und Titan enthalten kann,
$R^3$ ein Wasserstoffatom oder einen Alkylrest mit 1 bis 6 Kohlenstoffatomen je Rest und
x 3 oder 4, bedeutet,
mit einem Organosiloxan (2) mit endständigen Si-gebundenen Wasserstoffatomen
in Gegenwart von die Anlagerung von Si-gebundenem Wasserstoff an aliphatische Doppelbindung förderndem Katalysator (3) umgesetzt wird,
wobei das eingesetzte Verhältnis von Si-gebundenem Wasserstoff im Organosiloxan (2) zu aliphatischer Doppelbindung in organischer Verbindung (1) 1,3 bis 10, vorzugsweise 1,5 bis 5 beträgt,
in einem zweiten Schritt
die so erhaltenen, Si-gebundene Wasserstoffatome aufweisenden Kohlenwasserstoff-Siloxancopolymere
mit ($\alpha,\omega$)-Dialkenylsiloxanpolymer (4)
in Gegenwart von die Anlagerung von Si-gebundenem Wasserstoff an aliphatische Doppelbindung förderndem Katalysator (3) umgesetzt werden,
wobei das eingesetzte Verhältnis von aliphatischer Doppelbindung im $\alpha,\omega$-Dialkenylsiloxanpolymer (4) zu Si-gebundenem Wasserstoff in den Siloxancopolymeren 1,2 bis 10 vorzugsweise 1,5 bis 5 beträgt,
und gegebenenfalls in einem dritten Schritt
die so erhaltenen Alkenylgruppen aufweisenden Siloxancopolymere mit Organopolysiloxan (5),
ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden,
eingesetzt werden.

Die Alkenylgruppen aufweisenden Siloxancopolymere und deren Herstellung sind in der eingangs zitierten US-A 6,265,497 beschrieben.

Die erfindungsgemäßen Antimisting Additive, die Alkenylgruppen aufweisenden Siloxancopolymere, haben

den Vorteil, dass sie nicht nur die Aerosolbildung vernetzbarer Siliconbeschichtungszusammensetzungen in schnellen Beschichtungssystemen reduzieren, sondern dass sie insbesondere in beliebigen Mengenverhältnissen homogen mit den vernetzbaren Siliconbeschichtungszusammensetzungen mischbar sind im Gegensatz zu den Polyglykolgruppen aufweisenden Antimisting Additiven gemäß der eingangs zitierten EP-A 716 115.
Weiterhin weisen die erfindungsgemäßen Antimisting Additive keine inhibierende Wirkung auf.

In den erfindungsgemäßen, Alkenylgruppen aufweisenden Siloxancopolymeren sind die Siloxanblöcke vorzugsweise über Kohlenwasserstoffbrücken miteinander verbunden, woraus eine Kohlenwasserstoff-Siloxan-Blockstruktur resultiert.
Die erfindungsgemäßen, Alkenylgruppen aufweisenden Siloxancopolymere besitzen vorzugsweise eine Viskosität von 0,05 bis 500 000 Pa.s bei 25°C, bevorzugt 0,1 bis 100 000 Pa.s bei 25°C, besonders bevorzugt 0,2 bis 10 000 Pa.s bei 25°C.

Eine bevorzugte Ausführung bei sehr viskosen Siloxancopolymeren ist die Herstellung der erfindungsgemäßen, Alkenylgruppen aufweisenden Siloxancopolymere in Lösungsmitteln, bevorzugt Kohlenwasserstoffen mit einem Siedepunkt vorzugsweise unter 150°C, wie Toluol, Xylol, n-Hexan, n-Octan, i-Octan und Benzinfraktionen, in einer Konzentration von vorzugsweise 20-60 Gew.-% Siloxangehalt, wobei höhere oder niedrigere Konzentrationen im Bereich vorliegender Erfindung mit eingeschlossen sind.

Im ersten Verfahrensschritt kann eine Art von Verbindung (1) oder verschiedene Arten von Verbindung (1) eingesetzt werden.

Als Verbindung (1) wird im ersten Verfahrensschritt bevorzugt solche eingesetzt, bei der $R^2$ ein dreiwertiger Kohlenwasserstoffrest mit vorzugsweise 1 bis 25 Kohlenstoffatomen je Rest und x einen Wert von 3 bedeutet.

Das im ersten Verfahrensschritt eingesetzte Organosiloxan (2) enthält vorzugsweise zwei Si-gebundene Wasserstoffatome je Molekül.

Im ersten Verfahrensschritt kann eine Art von Organosiloxanen (2) oder verschiedene Arten von Organosiloxan (2) eingesetzt werden.

Als Organosiloxan (2) wird im ersten Verfahrensschritt vorzugsweise solches der allgemeinen Formel

$$HR_2SiO(SiR_2O)_nSiR_2H \quad \text{(II)},$$

wobei R vorzugsweise gleiche oder verschiedene, gegebenenfalls halogenierte Kohlenwasserstoffreste mit 1 bis 6 Kohlenstoffatomen je Rest und
n 0 oder eine ganze Zahl, besonders bevorzugt eine ganze Zahl von 7 bis 2000 bedeutet, wobei alle ganzen Zahlen zwischen 0 und 2000 als explizit genannt zu gelten haben,
verwendet.

Als $\alpha,\omega$-Dialkenylsiloxanpolymer (4) wird im zweiten Verfahrensschritt vorzugsweise solches der allgemeinen Formel

$$R^4{}_aR_{3-a}SiO(R_2Si\text{-}R^1\text{-}SiR_2O)_m(R_2SiO)_kSiR^4{}_aR_{3-a} \quad \text{(III)}$$

wobei R die oben dafür angegebene Bedeutung hat,
$R^1$ einen zweiwertigen Kohlenwasserstoffrest, bevorzugt einen Alkylenrest, mit vorzugsweise 2 bis 10 Kohlenstoffatomen je Rest bedeutet oder einen zweiwertigen Silan- oder Siloxanrest, vorzugsweise mit vorzugsweise 2 bis 10 Si-Einheiten,
$R^4$ ein endständig olefinisch ungesättigter Rest mit 2 bis 10 Kohlenstoffatomen ist,
a gleich oder verschieden sein kann und 0 oder 1 ist, durchschnittlich 0,7 bis 1,0 ist,
m gleich 0 oder eine ganze Zahl von 1 bis 10, vorzugsweise 0 ist,
und k gleich 0 oder eine ganze Zahl von 1 bis 1000, vorzugsweise 20 bis 1000, bevorzugt 50 bis 500 ist,
verwendet.

Es kann im zweiten Verfahrensschritt eine Art von $\alpha,\omega$-Dialkenylsiloxanpolymer (4) oder verschiedene Arten von $\alpha,\omega$-Dialkenylsiloxanpolymer (4) eingesetzt werden.

Beispiele für Reste R sind vorzugsweise Alkylreste, wie der Methyl-, Ethyl-, n-Propyl-, iso-Propyl-, 1-n-Butyl-, 2-n-Butyl- , iso-Butyl-, tert.-Butyl, n-Amyl und der n-Hexylrest. Bevorzugt ist der Methylrest.

Beispiele für halogenierte Reste R sind Halogenalkylreste, wie vorzugsweise der 3,3,3-Trifluor-n-propylrest, der 2,2,2,2',2',2'-Hexafluorisopropylrest, der Heptafluorisopropylrest.

Beispiele für Alkylreste $R^3$ sind vorzugsweise der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest. Bevor-

zugt ist $R^3$ ein Wasserstoffatom.

Beispiele für Reste $R^4$ sind Alkenylreste, wie der Vinyl-, 5-Hexenyl-, Cyclohexenyl-, 1-Propenyl-, Allyl-, 3-Butenyl, 4-Pentenyl und 7-Octenylrest, und Alkinylreste, wie der Ethinyl-, Propargyl- und 1-Propinylrest. Bevorzugt handelt es sich bei dem Rest $R^4$ um Alkenylreste, wobei der Vinylrest besonders bevorzugt ist.

Beispiele für Verbindungen (1), mit denen die erfindungsgemäßen Alkenylgruppen aufweisenden Siloxancopolymere herstellbar sind, sind
1,2,4-Trivinylcyclohexan,
1,3,5-Trivinylcyclohexan,
3,5-Dimethyl-4-vinyl-1,6-heptadien,
1,2,3,4-Tetravinylcyclobutan,
Methyltrivinylsilan,
Tetravinylsilan,
1,1,2,2-Tetraallyloxyethan,
wobei 1,2,4-Trivinylcyclohexan bevorzugt ist.

Beispiele für den Rest $R^2$ sind daher vorzugsweise solche der Formel

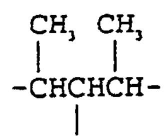

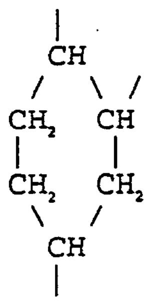

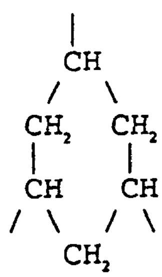

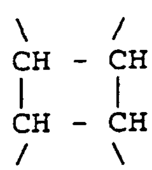

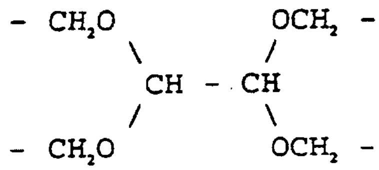

wobei der Rest der Formel

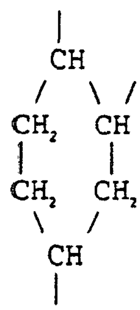

bevorzugt ist.

Beispiele für α,ω-Dialkenylsiloxanpolymer (4), mit denen die erfindungsgemäßen Alkenylgruppen aufweisenden Siloxancopolymere herstellbar sind, sind
α,ω-Divinylpolydimethylsiloxan,
α,ω-Diallylpolydimethylsiloxan,
α,ω-Dihexenylpolydimethylsiloxan,
α,ω-Dioctenylpolydimethylsiloxan,
sowie Polyadditionsprodukte aus Organosiloxan (2) und Dienen wie
1,5-Hexadien,
1,7-Octadien,
1,9-Decadien,
1,11-Dodecadien,
1,13-Tetradecadien,
2,5-Dimethyl-1,5-hexadien,
3,5-Dimethyl-1,6-heptadien,
1,3-Divinylbenzol,
1,4-Divinylbenzol, 1,3-Diisopropenylbenzol, Divinyldimethylsilan,
1,3-Divinyl-1,1,3,3-tetramethyldisiloxan,
wobei α, ω - Divinylpolydimethylsiloxane und α, ω-Dihexenylpolydimethylsiloxane bevorzugt sind.

Beispiele für Reste $R^1$ sind solche der Formel

$$-(CH_2)_6-$$

$$-(CH_2)_8-$$

$$-(CH_2)_{10}-$$

$$-(CH_2)_{12}-$$

$-(CH_2)_{14}-$

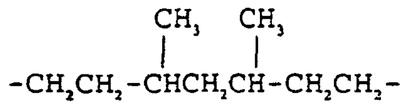

$-CH_2CH_2-C_6H_4-CH_2CH_2-$

wobei der Rest der Formel

$-(CH_2)_6-$

bevorzugt ist.

Organosiloxan (2) wird im ersten Verfahrensschritt in solchen Mengen eingesetzt, dass das Verhältnis von Si-gebundenem Wasserstoff in Organosiloxan (2) zu aliphatischer Doppelbindung in Verbindung (1) 1,3 bis 10, bevorzugt 1,5 bis 4,0, besonders bevorzugt 1,8 bis 3,0 beträgt.

Da Organosiloxan (2) im Überschuss eingesetzt wird, reagieren daher in dem ersten Verfahrensschritt vorzugsweise alle aliphatische Doppelbindungen in der Verbindung (1) ab, und es werden Siloxancopolymere erhalten, die Si-gebundene Wasserstoffatome aufweisen.

Der erste Verfahrensschritt, die Umsetzung von Verbindung (1), wie 1,2,4 Trivinylcyclohexan, mit Organosiloxan (2), wie 1,3-Dihydrogen-1,1,3,3-tetramethyldisiloxan, im Überschuss in Gegenwart von Katalysator (3) kann durch folgendes Reaktionsschema (1) dargestellt werden:

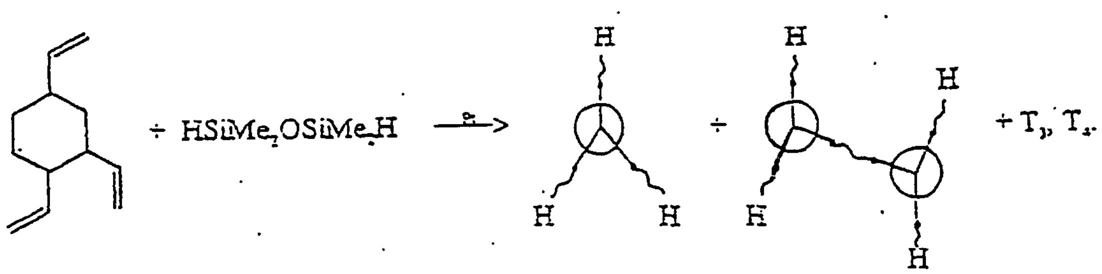

T1 T2

Die erhaltene Siloxancopolymermischung enthält dabei einen Anteil von vorzugsweise über 50% von individuellen Verbindungen $T_3$ und $T_4$ und höher verzweigten Polymeren.

Je nach dem stöchiometrischen Verhältnis H-Si/C=C enthält die Siloxancopolymermischung wechselnde Mengen an Organosiloxan (2), welches bei niedrigen Molekulargewichten im Vakuum entfernt werden kann, ansonsten als Komponente mit aktivem Wasserstoff in der Produktmischung verbleibt.

Als die Anlagerung von Si-gebundenem Wasserstoff an aliphatische Doppelbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon,

Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gammapicolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid.

Der Katalysator (3) wird im ersten Verfahrensschritt vorzugsweise in Mengen von 0,5 bis 100 Gew.-ppm (Gewichtsteilen je Million Gewichtsteilen), bevorzugt in Mengen von 2 bis 10 Gew.-ppm, jeweils berechnet als elementares Platin und bezogen auf das Gesamtgewicht von Verbindung (1) und Organosiloxan (2) verwendet.

Der erste Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 20°C bis 150°C, bevorzugt 20°C bis 120°C, besonders bevorzugt 20°C bis 100°C durchgeführt.

Da die mindestens drei aliphatische Doppelbindungen aufweisende Verbindung (1), z. B. 1,2,4-Trivinylcyclohexan, bei höheren Temperaturen zur Polymerisation neigt, können bei dem ersten Verfahrensschritt vorzugsweise Radikalinhibitoren, wie 4-Methoxyphenol, 2,6-Bis(tert.butyl)-4-methylphenol, Phenothiazin, Hydrochinon oder Brenzcatechin mitverwendet werden. Die Radikalinhibitoren werden dabei vorzugsweise in Mengen von 10 bis 500 Gew.-ppm, bezogen auf das Gesamtgewicht an Verbindung (1) und Organosiloxan (2), eingesetzt.

In dem ersten wie auch im zweiten Verfahrensschritt können vorzugsweise inerte, organische Lösungsmittel mitverwendet werden. Beispiele für inerte, organische Lösungsmittel sind Toluol, Xylol, Octanisomere, Heptanisomere, Butylacetat, 1,2-Dimethoxyethan, Tetrahydrofuran und Cyclohexan.

Die gegebenenfalls mitverwendeten inerten organischen Lösungsmittel können nach dem ersten bzw. zweiten Verfahrensschritt destillativ entfernt werden oder im Reaktionsgemisch verbleiben.

$\alpha,\omega$-Dialkenylsiloxanpolymer (4) wird in dem zweiten Verfahrensschritt in solchen Mengen eingesetzt, daß das Verhältnis von aliphatischer Doppelbindung in $\alpha,\omega$-Dialkenylsiloxanpolymer (4) zu Si-gebundenem Wasserstoff in dem im ersten Schritt erhaltenen Kohlenwasserstoff-Siloxancopolymer 1,2 bis 10, bevorzugt 1,5 bis 5,0, besonders bevorzugt 2,0 bis 4,0 beträgt.

Da $\alpha,\omega$-Dialkenylsiloxanpolymer (4) im Überschuss eingesetzt wird, reagieren daher in dem zweiten Verfahrensschritt vorzugsweise alle Si-gebundenen Wasserstoffatome von den im ersten Verfahrensschritt erhaltenen Kohlenwasserstoff-Siloxancopolymeren ab und es werden Alkenylgruppen aufweisende Siloxancopolymere erhalten.

Der Katalysator (3) wird im zweiten Verfahrensschritt vorzugsweise in Mengen von 0,5 bis 100 Gew.-ppm (Gewichtsteilen je Million Gewichtsteilen), bevorzugt in Mengen von 2 bis 10 Gew.-ppm, jeweils berechnet als elementares Platin und bezogen auf das Gesamtgewicht von $\alpha,\omega$-Dialkenylsiloxanpolymer (4) und die im ersten Verfahrensschritt erhaltenen Si-gebundene Wasserstoffatome aufweisenden Kohlenwasserstoff-Siloxancopolymere, verwendet.

Der zweite Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der zweite Verfahrensschritt vorzugsweise bei einer Temperatur von 20°C bis 150°C, bevorzugt 20°C bis 120°C, durchgeführt.

Die im zweiten Verfahrensschritt erhaltenen Alkenylgruppen aufweisenden Siloxancopolymere können in einem dritten Verfahrensschritt mit Organopolysiloxan (5) equilibriert werden.

Der ggf. dritte Verfahrensschritt, die Equilibrierung, vergrößert die durchschnittlichen Kettenlängen der verwendeten Komponenten (2) und (4).

Auch im dritten Verfahrensschritt werden höher verzweigte Siloxancopolymere erhalten. Bei der Equilibrierung ist die Bildung von Cyclen ohne funktionelle Gruppen, die dem Fachmann bekannt ist und die in Mengen von 8 bis 15 Gew.-% vorliegen, unvermeidbar, aber nicht störend. Falls gewünscht, können deren flüchtige Anteile (Cyclen mit 3-9 Si-Atomen) durch Vakuum und höhere Temperaturen aus dem Produktgemisch entfernt werden. Ebenso wie die Cyclen können bei der Equilibrierung andere nicht erwünschte aber nicht störende Nebenprodukte in kleinen Mengen erhalten werden.

Als Organopolysiloxane (5) werden vorzugsweise solche ausgewählt aus der Gruppe bestehend aus vorzugsweise linearen, endständige Triorganosiloxygruppen aufweisenden Organopolysiloxanen der Formel

$$R_3SiO(SiR_2O)_rSiR_3 ,$$

wobei R die oben dafür angegebene Bedeutung hat und
r 0 oder eine ganze Zahl im Wert von vorzugsweise 1 bis 1500, bevorzugt 10 bis 300, ist,
linearen, endständige Hydroxylgruppen aufweisenden Organopolysiloxanen der Formel

$$HO(SiR_2O)_sH,$$

wobei R die oben dafür angegebene Bedeutung hat und
s eine ganze Zahl im Wert von vorzugsweise 1 bis 1500, bevorzugt 10 bis 300, ist,
verzweigten, gegebenenfalls Hydroxylgruppen aufweisenden Organopolysiloxanen aus Einheiten der Formel

$$R_3SiO_{1/2},\ R_2SiO \text{ und } RSiO_{3/2},$$

wobei R die oben dafür angegebene Bedeutung hat,
cyclischen Organopolysiloxanen der Formel

$$(R_2SiO)_t\ ,$$

wobei R die oben dafür angegebene Bedeutung hat und
t eine ganze Zahl von 3 bis 12 ist,
und Mischpolymerisaten aus Einheiten der Formel

$$R_2SiO \text{ und } RSiO_{3/2}\ ,$$

wobei R die oben dafür angegebene Bedeutung hat,
eingesetzt.

Bevorzugte Organopolysiloxane (5) sind vorzugsweise die der Formeln $R_3SiO(SiR_2O)_rSiR_3$, $HO(SiR_2O)_sH$ und $(R_2SiO)_t$, wobei diejenigen der Formel $R_3SiO(SiR_2O)_rSiR_3$ besonders bevorzugt sind.

Das Mengenverhältnis der bei der gegebenenfalls durchgeführten Equilibrierung eingesetzten Organopolysiloxane (5)
und Alkenylgruppen aufweisenden Siloxancopolymere wird lediglich durch den gewünschten Anteil der Alkenylgruppen in den bei der gegebenenfalls durchgeführten Equilibrierung erzeugten Siloxancopolymeren und durch die gewünschte mittlere Kettenlänge bestimmt.

Bei dem gegebenenfalls durchgeführten Equilibrieren werden vorzugsweise basische oder saure Katalysatoren, welche die Equilibrierung fördern, eingesetzt. Beispiele für solche Katalysatoren sind vorzugsweise Alkalihydroxide, wie Natriumhydroxid, Kaliumhydroxid, und Cäsiumhydroxid, Trimethylbenzylammoniumhydroxid und Tetramethylammoniumhydroxid. Bevorzugt sind Alkalihydroxide. Alkalihydroxide werden vorzugsweise in Mengen von 50 bis 10 000 Gew.-ppm (= Teile je Million), insbesondere 500 bis 2 000 Gew.ppm, jeweils bezogen auf das Gesamtgewicht der eingesetzten Alkenylgruppen aufweisenden Siloxancopolymere und eingesetzten Organopolysiloxane (5), verwendet.

Beispiele für saure Katalysatoren sind vorzugsweise Schwefelsäure, Phosphorsäure, Trifluormethansäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (=Teile je Million), insbesondere 50 bis 200 Gew.-ppm, jeweils bezogen auf das Gesamtgewicht der eingesetzten Organosiliciumverbindungen, verwendet.

Die gegebenenfalls durchgeführte Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten Alkenylgruppen aufweisenden Siloxancopolymere und eingesetzten Organopolysiloxane (5), in mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Alternativ zur beschriebenen Abfolge der Verfahrensschritte zur Herstellung von Alkenylgruppen aufweisenden Kohlenwasserstoff-Siloxancopolymeren kann, falls gewünscht, eine Erhöhung des durchschnittlichen Molekulargewichts bzw. eine Kettenverlängerung der im 1. Verfahrensschritt erhaltenen Aktivwasserstoff enthaltenden Kohlenwasserstoff-Siloxancopolymeren durch Equilibrierung auch direkt daran im Anschluss in einem 2. Verfahrensschritt erfolgen. Es werden hierfür dieselben Organopolysiloxane (5) eingesetzt und unter den dort beschriebenen Bedingungen zur Reaktion gebracht. Bevorzugte Organopolysiloxane (5) sind die der Formeln $R_3SiO(SiR_2O)_rSiR_3$, $HO(SiR_2O)_sH$ und $(R_2SiO)_t$, wobei diejenigen der Formel $R_3SiO(SiR_2O)_rSiR_3$ besonders bevorzugt sind und R dieselbe Bedeutung wie oben hat.

Bei dieser alternativen Abfolge der Verfahrensschritte werden dann in einem 3. Verfahrensschritt die durch Equilibrierung erhaltenen Aktivwasserstoff aufweisenden Kohlenwasserstoff-Siloxancopolymere mit α,ω-Dialkenylsiloxanpolymer (4) umgesetzt, wobei dieses bevorzugt in Mengen eingesetzt wird, daß das Verhältnis von aliphatischer Doppelbindung in (4) zu Si-gebundenem Wasserstoff in zuvor erhaltenem Copolymer vorzugsweise 1,5-5,0, besonders bevorzugt 2,0-4,0 beträgt.

Bei dieser alternativen Abfolge der Verfahrensschritte sind somit lediglich die eingangs beschriebenen Schritte in ihrer Reihenfolge vertauscht, sodass Verfahrensschritt 3 vor dem Verfahrensschritt 2 ausgeführt wird.

Als Antimisting Additive werden bevorzugt solche Alkenylgruppen aufweisende Siloxancopolymere eingesetzt, die ohne einen weiteren Equilibrierungsschritt hergestellt werden und besonders hohe Verzweigung aufweisen. Bevorzugte Additive werden erhalten, wenn in den angegebenen besonders bevorzugten stöchiometrischen Bereichen gearbeitet wird. Da diese Siloxancopolymere meist höhere Viskositäten aufweisen, können sie zur einfacheren Handhabung nach ihrer Herstellung mit weiterem Siloxan (4) gemischt werden.

Die erfindungsgemäßen Antimisting Additive werden zur Reduktion der Aerolsolbildung den vernetzbaren Siliconbeschichtungszusammensetzungen zugegeben.

Die erfindungsgemäßen Antimisting Additive, die Alkenylgruppen aufweisenden Siloxancopolymere, werden in den vernetzbaren Siliconbeschichtungszusammensetzungen vorzugsweise in Mengen von 0,5 bis 10 Gew.-%, bevorzugt 1 bis 5 Gew.-%, bezogen auf das Gesamtgewicht der vernetzbaren Siliconbeschichtungszusammensetzungen, eingesetzt.

Als vernetzbare Siliconbeschichtungszusammensetzungen werden vorzugsweise solche enthaltend

(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren

eingesetzt.

Bei den vernetzbaren Siliconbeschichtungszusammensetzungen kann vorzugsweise eine Art des erfindungsgemäßen Antimisting Additivs (X) oder verschiedene Arten des erfindungsgemäßen Antimisting Additivs (X) eingesetzt werden.

Als Organopolysiloxane (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel IV

$$R^5_zR^6_ySiO_{\frac{4-z-y}{2}} \quad \text{(IV)},$$

wobei $R^5$ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest und
$R^6$ einen einwertigen Kohlenwasserstoffrest mit terminaler, aliphatischer Kohlenstoff-Kohlenstoff-Mehrfachbindung mit 2 bis 8 Kohlenstoffatomen je Rest bedeutet,
z 0, 1, 2 oder 3,
y 0, 1 oder 2
und die Summe z+y 0, 1, 2 oder 3 ist,
mit der Maßgabe, dass durchschnittlich mindestens 1,5 Reste $R^6$, bevorzugt durchschnittlich mindestens 2 Reste $R^6$, vorliegen, verwendet.

Bevorzugt als Organosiliciumverbindungen (A) sind Organopolysiloxane der allgemeinen Formel

$$R^6_gR^5_{3-g}SiO(SiR^5_2O)_v(SiR^5R^6O)_wSiR^5_{3-g}R^6_g \quad \text{(V)}$$

wobei $R^5$ und $R^6$ die oben dafür angegebene Bedeutung haben,
g 0, 1 oder 2,
v 0 oder eine ganze Zahl von 1 bis 1500 und
w 0 oder eine ganze Zahl von 1 bis 200 ist,
mit der Maßgabe, dass durchschnittlich mindestens 1,5 Reste $R^6$, bevorzugt durchschnittlich mindestens 2 Reste $R^6$,

enthalten sind.

Im Rahmen dieser Erfindung soll Formel (V) so verstanden werden, dass v Einheiten -($SiR^5_2O$)- und w Einheiten -($SiR^5R^6O$)- in beliebiger Weise im Organopolysiloxanmolekül verteilt sein können.

Als Organosiliciumverbindungen (A) können auch verzweigte Polymere mit endständigen ω-Alkenylgruppen, bevorzugt Si- gebundene Vinylgruppen, wie sie in US 6,034,225, insbesondere Spalte 1, Zeile 43 bis Spalte 2, Zeile 13, und US 6,258,913, insbesondere Spalte 1, Zeile 62 bis Spalte 2, Zeile 35, beschrieben sind, verwendet werden. Als Organosiliciumverbindungen (A) können auch lineare Organopolysiloxane, wie sie in US 6,274,692, insbesondere Spalte 2, Zeile 3 bis 27, beschrieben sind und die nicht an beiden Enden je einen aliphatisch ungesättigten Kohlenwasserstoffrest, wie eine Si-gebundene Vinylgruppe, aufweisen sondern an den Enden auch aliphatisch gesättigte Kohlenwasserstoffreste, wie Si-gebundene Methylgruppen aufweisen, verwendet werden.
Als Organosiliciumverbindungen (A) können auch solche, wie sie in US-A 5,241,034, insbesondere Spalte 16, Zeile 23 bis Spalte 17, Zeile 35, DE-A 195 22 144, insbesondere Seite 2, Zeile 44 bis 67, DE-A 196 29 053, insbesondere Seite 2, Zeile 51 bis Seite 3, Zeile 29 und US-A 5,760,145, insbesondere Spalte 2, Zeile 46 bis Spalte 4, Zeile 23 beschrieben sind, verwendet werden.

Die Organopolysiloxane (A) besitzen vorzugsweise eine durchschnittliche Viskosität von 100 bis 10 000 mPa.s bei 25°C.

Gegenstand der Erfindung sind weiterhin vernetzbare Siliconbeschichtungszusammensetzungen mit reduzierter Aerosolbildung enthaltend

(X) erfindungsgemäße Antimisting Additive in Mengen von 0,5 bis 10 Gew.-%, bezogen auf das Gesamtgewicht der vernetzbaren Siliconbeschichtungszusammensetzung,

(A) Organopolysiloxane, die Reste mit aliphatischen Kohlenstoff-Kohlenstoff-Mehrfachbindungen aufweisen, der allgemeinen Formel

$$R^6_gR^5_{3-g}SiO(SiR^5_2O)_v(SiR^5R^6O)_wSiR^5_{3-g}R^6_g$$

wobei $R^5$ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest bedeutet,
$R^6$ einen einwertigen Kohlenwasserstoffrest mit terminaler, aliphatischer Kohlenstoff-Kohlenstoff-Mehrfachbindung mit 2 bis 8 Kohlenstoffatomen je Rest bedeutet,
g 0, 1 oder 2,
v 0 oder eine ganze Zahl von 1 bis 1500 und
w 0 oder eine ganze Zahl von 1 bis 200 ist,
mit der Maßgabe, dass durchschnittlich mindestens 1,5 Reste $R^6$, enthalten sind,

(B) Organosiliciumverbindungen mit Si gebundenen Wasserstoffatomen

(C) die Anlagerung von Si-gebundenem Wasserstoff an aliphatische Mehrfachbindung fördernde Katalysatoren und gegebenenfalls

(D) Inhibitoren.

Beispiele für Kohlenwasserstoffreste $R^5$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest. Beispiele für Reste $R^6$ sind Alkenylreste, wie der Vinyl-, 5-Hexenyl-, Allyl-, 3-Butenyl- und 4-Pentenylrest; und Alkinylreste, wie der Ethinyl-, Propargyl- und 1-Propinrest.

Als Organosiliciumverbindungen (B), die Si-gebundene Wasserstoffatome aufweisen, werden vorzugsweise lineare, cyclische oder verzweigte Organopolysiloxane aus Einheiten der allgemeinen Formel VI

$$R^5_zR^6_ySiO_{\frac{4-z-y}{2}} \quad (IV),$$

wobei
$R^5$ die oben dafür angegebene Bedeutung hat,

e 0, 1, 2 oder 3,
f 0, 1 oder 2
und die Summe von e+f 0, 1, 2 oder 3 ist,
mit der Maßgabe, daß durchschnittlich mindestens 2 Si-gebundene Wasserstoffatome vorliegen, verwendet.

Vorzugsweise enthalten die Organosiliciumverbindungen (B) mindestens 3 Si-gebundene Wasserstoffatome.

Bevorzugt werden als Organosiliciumverbindungen (B) Organopolysiloxane der allgemeinen Formel

$$H_hR^5{}_{3-h}SiO(SiR^5{}_2O)_o(SiR^5HO)_pSiR^5{}_{3-h}H_h \qquad (VII)$$

wobei $R^5$ die oben dafür angegebene Bedeutung hat,
h 0, 1 oder 2,
o 0 oder eine ganze Zahl von 1 bis 1500 und
p 0 oder eine ganze Zahl von 1 bis 200 ist,
mit der Maßgabe, dass durchschnittlich mindestens 2 Si-gebundene Wasserstoffatome, vorliegen, verwendet.

Im Rahmen dieser Erfindung soll Formel VII so verstanden werden, dass o Einheiten -($SiR^5{}_2O$)- und p Einheiten -($SiR^5HO$)- in beliebiger Weise im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxanund Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxanund/oder Phenylmethylsiloxaneinheiten.

Als Organosiliciumverbindungen (B) können auch solche, wie sie in US-A 5,691,435, insbesondere Spalte 3, Zeile 45 bis Spalte 4, Zeile 29, beschrieben sind, verwendet werden.

Die Organopolysiloxane (B) besitzen vorzugsweise eine durchschnittliche Viskosität von 10 bis 1 000 mPa. s bei 25°C.

Organosiliciumverbindung (B) wird vorzugsweise in Mengen von 0,5 bis 3,5, bevorzugt 1,0 bis 3,0 Grammatom, Si-gebundenen Wasserstoff je Mol Si-gebundenen Restes mit aliphatischer Kohlenstoff-Kohlenstoff-Mehrfachbindung in der Organosiliciumverbindung (A) eingesetzt.

Als die Anlagerung von Si-gebundenem Wasserstoff an aliphatische Mehrfachbindungen fördernde Katalysatoren können auch bei den vernetzbaren Siliconbeschichtungszusammensetzungen die gleichen Katalysatoren eingesetzt werden, die auch bisher zur Förderung der Anlagerung von Si-gebundenem Wasserstoff an aliphatische Mehrfachbindung eingesetzt werden konnten. Als Bestandteil (C) werden vorzugsweise die oben genannten Katalysatoren (3) verwendet.

Die Katalysatoren (C) werden vorzugsweise in Mengen von 10 bis 1000 Gew.-ppm (Gewichtsteilen je Million Gewichtsteilen), bevorzugt 50 bis 200 Gew.-ppm, jeweils berechnet als elementares Platinmetall und bezogen auf das Gesamtgewicht der Organosiliciumverbindungen (A) und (B), eingesetzt.

Die vernetzbaren Siliconbeschichtungszusammensetzungen können die Anlagerung von Si-gebundenem Wasserstoff an aliphatische Mehrfachbindung bei Raumtemperatur verzögernde Mittel, sogenannte Inhibitoren (D), enthalten.

Als Inhibitoren (D) können auch bei den vernetzbaren Siliconbeschichtungszusammensetzungen alle Inhibitoren verwendet werden, die auch bisher für den gleichen Zweck verwendet werden konnten.

Beispiele für Inhibitoren (D) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel
$HC{\equiv}C\text{-}C(CH_3)(OH)\text{-}CH_2\text{-}CH_2\text{-}CH{=}C(CH_3)_2$, käuflich erwerblich unter dem Handelsnamen "Dehydrolinalool" bei der Fa. BASF.

Wird Inhibitor (D) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (A) und (B), eingesetzt.

Beispiele für weitere Bestandteile, die bei den vernetzbaren Siliconbeschichtungszusammensetzungen mitverwendet werden können, sind Mittel zur Einstellung der Trennkraft, organische Lösungsmittel, Haftvermittler und Pigmente.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^7R^5{}_2SiO_{1/2} \text{ und } SiO_2,$$

sogenannte MQ-Harze, wobei $R^7$ ein Wasserstoffatom, ein Kohlenwasserstoffrest $R^5$, wie Methylrest, ein Alkenylrest $R^6$, wie Vinylrest, ist, und $R^5$ und $R^6$ die oben dafür angegebene Bedeutung haben und die Einheiten der Formel $R^7R^5{}_2SiO_{1/2}$ gleich oder verschieden sein können. Das Verhältnis von Einheiten der Formel $R^7R^5{}_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Beispiele für organische Lösungsmittel sind Benzine, z. B. Alkangemische mit einem Siedebereich von 70°C bis 180°C, n-Heptan, Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, und Ketone, wie Methylethylketon und Cyclohexanon.

Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gesamtgewicht der Organosiliciumverbindungen (A) und (B), eingesetzt.

Die Reihenfolge beim Vermischen der Bestandteile (X), (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 70°C bis 180°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Gegenstand der Erfindung sind weiterhin Formkörper hergestellt durch Vernetzung der erfindungsgemäßen Zusammensetzungen.

Bei den Formkörper handelt es sich vorzugsweise um Beschichtungen, bevorzugt um klebrige Stoffe abweisende Überzüge.

Gegenstand der Erfindung ist weiterhin ein Verfahren zur Herstellung von Beschichtungen durch Auftragen von erfindungsgemäßen vernetzbaren Zusammensetzungen auf die zu beschichtenden Oberflächen und anschließende Vernetzung der Zusammensetzungen.

Die erfindungsgemäßen vernetzbaren Zusammensetzungen werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von erfindungsgemäßen vernetzbaren Zusammensetzungen auf die klebrige Stoffe abweisend zu machenden Oberflächen und anschließende Vernetzung der Zusammensetzungen.

Das Auftragen von den erfindungsgemäßen Zusammensetzungen auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den zu beschichtenden Oberflächen beträgt vorzugsweise 0,3 bis 6 $\mu$m, besonders bevorzugt 0,5 bis 2,0 $\mu$m.

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die die erfindungsgemäßen Antimisting Additiven enthaltenden vernetzbaren Siliconbeschichtungszusammensetzungen eignen sich insbesondere zur Verwendung in schnellen Beschichtungssystemen mit Beschichtungsgeschwindigkeiten vorzugsweise von 300 bis 1500 m/min, bevorzugt 400 bis 1000 m/min, bei denen die erfindungsgemäßen Zusammensetzungen bei hohen Geschwindigkeiten auf die zu beschichtenden Oberflächen aufgebracht werden.

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst.
Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen. Das off-line Verfahren und das in-line Verfahren kann mit den erfindungsgemäßen Zusammensetzungen bei einer Geschwindigkeit von 300 bis 1500 m/min, bevorzugt 400 bis 1000 m/min, betrieben werden.

**1. Herstellung der Alkenylgruppen aufweisenden Siloxancopolymere:**

Beispiel 1:

In 503 g 1,1,3,3-Tetramethyldisiloxan, das auf 50°C erwärmt wurde, dosiert man langsam insgesamt 162 g 1,2,4-Trivinylcyclohexan, in dem eine 1 Gew.-%ige (bezogen auf elementares Platin) Lösung eines Platin-1,3-Divinyl-1,1,3,3-tetramethyldisiloxan-Komplexes in einem $\alpha,\omega$-Divinyldimethylpolysiloxan mit einer Viskosität von 1000 mPa·s bei 25°C, eine Lösung des sogenannten Karstedt-Katalysators (dessen Herstellung in US 3,775,452 beschrieben ist), gelöst wurde, sodass die Lösung 40 ppm Platin enthält. Nach Dosierende lässt man bei 80°C ausreagieren und erreicht einen C=C-Umsatz ($^1$H-NMR) von mehr als 99%. Überschüssiges Disiloxan wird ausdestilliert, worauf ein Hydrogensiloxanpolymer mit einer Viskosität von 60 mm$^2$/s (25°C) und einem Gehalt an Si-gebundenem Wasserstoff (Aktivwasserstoffgehalt) von 0,43 Gew.-% erhalten wird.

Bei 25°C werden 50 g dieses Zwischenproduktes in 3120 g eines $\alpha,\omega$-Divinyldimethylpolysiloxans mit einer Kettenlänge von 100 Si-Atomen ($Si_{100}$) homogen eingemischt und mit 3,2 g der oben beschriebenen Karstedt-Katalysatorlösung mit 1 Gew.-% Platingehalt aktiviert. Die kräftig gerührte Mischung wird erheblich viskoser und erreicht nach 80 Minuten eine Viskosität von 6 700 mm$^2$/s (25°C). Gemäß der Einsatzstoffe erhält man ein hochverzweigtes Siloxanpolymer mit Vinyl-Si-Endgruppen und einem Gehalt an Si-gebundenen Vinylgruppen (Vinylgehalt) von 0,20 mequ./g. Das Polymer ist farblos und klar, sowie in jedem Verhältnis mit einem $\alpha,\omega$-Divinyldimethylpolysiloxan mit einer

Viskosität von 500 mPa·s (25°C) mischbar.

Beispiel 2:

Ein Gemisch aus 90,2 g 1,2,4-Trivinylcyclohexan und 1 869 g eines $\alpha,\omega$-Dihydrogendimethylpolysiloxans mit einem Aktivwasserstoffgehalt von 0,214 Gew.-% wird bei 25°C durch Zugabe von 0,34 g einer Karstedt-Katalysatorlösung mit 1 Gew-% Platingehalt (wie in Beispiel 1 beschrieben) aktiviert. Eine Temperaturerhöhung auf 70°C innerhalb weniger Minuten zeigt den Ablauf der Hydrosilylierung an, die nach 15 Minuten mehr als 99 % Umsatz erreicht. Das verzweigte Siloxanpolymer mit HSi-Endgruppen hat einen Aktivwasserstoffgehalt von 1,19 mequ./g und eine Viskosität von 27 $mm^2/s$ (25°C).

Zur Herstellung eines verzweigten Vinylpolymers werden 126 g des zuvor erhaltenen Hydrogenpolymers mit 392 g eines $\alpha,\omega$-Divinyldimethylpolysiloxans mit einem Vinylgehalt von 0,67 mequ./g gemischt und auf 47°C erwärmt. Zugabe von 10 ppm Platin in Form der Karstedt-Katalysatorlösung (wie in Beispiel 1 beschrieben) führt zu sofortiger Temperaturerhöhung auf 68°C, und nach 30 Minuten zu einem farblosen, klaren Vinylpolymer mit einer Viskosität von 4 840 $mm^2/s$ (25°C) und einem Vinylgehalt von 0,22 mequ./g.

Beispiel 3:

Die Arbeitsweise von Beispiel 2 wird wiederholt mit der Abänderung, dass anstelle der 392 g eines $\alpha,\omega$-Divinyldimethylpolysiloxans mit einem Vinylgehalt von 0,67 mequ./g 1089 g des $\alpha,\omega$-Divinyldimethylpolysiloxans mit einer Kettenlänge von 100 Si-Atomen ($Si_{100}$) eingesetzt werden. Es wird ein verzweigtes Vinylpolymer mit einer Viskosität von 7 510 $mm^2/s$ (25°C) und einem Vinylgehalt von nur 0,12 mequ./g als klares farbloses Öl erhalten.

Beispiel 4:

Die Arbeitsweise von Beispiel 2 wird wiederholt mit der Abänderung, dass anstelle der 392 g eines $\alpha,\omega$-Divinyldimethylpolysiloxans mit einem Vinylgehalt von 0,67 mequ./g 2040 g eines $\alpha,\omega$-Divinyldimethylpolysiloxans mit einer Kettenlänge von 163 Si-Atomen ($Si_{163}$) eingesetzt werden. Durch die Erhöhung der Kettenlänge des eingesetzten $\alpha,\omega$-Divinyldimethylpolysiloxans wird die Armlänge des verzweigten Vinylpolymers weiter erhöht. Es wird ein klares, farbloses Öl mit einer Viskosität von 11100 $mm^2/s$ (25°C) und einem Vinylgehalt von nur 0,087 mequ./g erhalten.

Beispiel 5:

Ein Gemisch aus 75,2 g 1,2,4-Trivinylcyclohexan und 1 242 g eines $\alpha,\omega$-Dihydrogendimethylpolysiloxans mit einem Aktivwasserstoffgehalt von 0,185 Gew.-% wird bei 25°C durch Zugabe von 0,26 g einer Karstedt-Katalysatorlösung mit 1 Gew.-% Pt-Gehalt (wie in Beispiel 1 beschrieben) aktiviert. Die sofortige exotherme Reaktion erwärmt den Ansatz bis auf 82°C, wobei ein Umsatz der C=C-Gruppen von mehr als 99% erreicht wird ($^1$H-NMR). Das entstandene verzweigte hydrogenfunktionelle Siloxanpolymer hat eine Viskosität von 159 $mm^2/s$ (25°C) und einen Aktivwasserstoffgehalt von 0,70 mequ./g.

Aus dieser Vorstufe wird ein verzweigtes Vinylpolymer hergestellt, in dem man 68 g dieses Produktes mit 647 g $\alpha,\omega$-Divinyldimethylpolysiloxans mit einer Kettenlänge von 100 Si-Atomen ($Si_{100}$) homogen mischt und mit 10 ppm Platin in Form einer Lösung des Karstedt-Katalysator (wie in Beispiel 1 beschrieben) aktiviert. Unter geringer Erwärmung wird das Gemisch erheblich viskoser und erreicht schließlich 3 570 $mm^2/s$ (25°C). Der Gehalt an Vinyldimethylsiloxygruppen beträgt 0,182 mequ./g. Das Polymer ist in jedem Verhältnis mit linearem $\alpha,\omega$-Divinyldimethylpolysiloxan mit einer Viskosität von 500 mPa.s (25°C) klar mischbar.

Beispiel 6:

Zur Herstellung von verzweigten Vinylpolymeren mit noch höherer Viskosität verwendet man vorteilhaft Lösemittel.
So werden 40 g der hydrogenfunktionellen Siloxanpolymervorstufe aus Beispiel 5 mit 454 g $\alpha,\omega$-Divinyldimethylpolysiloxan mit einer Viskosität von 490 $mm^2/s$ (25°C) und 494 g Toluol gut gemischt, die Polyaddition durch Zugabe von 0,49 g einer Karstedt-Katalysatorlösung mit 1 Gew.-% Platingehalt (wie in Beispiel 1 beschrieben) gestartet. Über einen Zeitraum von ca. 2 Stunden steigt die Temperatur nur wenig an. Man dosiert dann 170 g $\alpha,\omega$-Divinyldimethylpolysiloxan mit einer Kettenlänge von 100 Si-Atomen ($Si_{100}$) zu und entfernt alles Toluol im Vakuum bei 100°C. Man erhält eine sehr viskose Lösung eines verzweigten Vinylpolymers in linearem Vinylpolymer mit 10 400 $mm^2/s$ (25°C). Der Vinylgehalt beträgt 0,14 mequ./g.

Beispiel 7:

Das Beispiel 5 wird mit verminderter Menge an 1,2,4-Trivinylcyclohexan wiederholt. Statt 75,2 g 1,2,4-Trivinylcyclohexan werden nur 70,7 g eingesetzt, um ein höher verzweigtes hydrogenfunktionelles Siloxanpolymer zu erhalten. Nach vollständigem Umsatz der C=C-Gruppen erhält man ein schwach gelbliches Öl mit einer Viskosität von 416 $mm^2/s$ (25°C) und einem Aktivwasserstoffgehalt von 0,061 Gew.-%.

Diese Vorstufe läßt sich zur Herstellung sehr hoch verzweigter Siloxane mit endständigen Vinylgruppen verwenden, indem man 99 g dieser Vorstufe mit 762 g $\alpha,\omega$-Divinyldimethylpolysiloxan mit einer Kettenlänge von 100 Si-Atomen ($Si_{100}$) mischt und 415 g Toluol zufügt. Nach Zusatz von 0,7 g einer Karstedt-Katalysatorlösung mit 1 Gew.-% Pt-Gehalt (wie in Beispiel 1 beschrieben) steigt die Viskosität der Lösung langsam an und erreicht schließlich 1 640 $mm^2/s$ (25°C). Man läßt dann 1000 g des eingesetzten $\alpha,\omega$-Divinyldimethylpolysiloxans zulaufen und entfernt das Toluol bei 100°C unter vermindertem Druck.
Es resultiert eine klare, farblose Lösung eines hochverzweigten Siloxancopolymers in dem linearen Siloxanpolymer, das eine Viskosität von 5 450 $mm^2/s$ (25°C) und eine Konzentration an Vinyldimethylgruppen von 0,23 mequ./g aufweist.

Beispiel 8:

Man wiederholt das Beispiel 5, indem in der 2. Stufe die gleiche Menge des verzweigten hydrogenfunktionellen Siloxanpolymers, aber nur 540 g statt 647 g des linearen $\alpha,\omega$-Divinyldimethylpolysiloxans mit einer Kettenlänge von 100 Si-Atomen ($Si_{100}$) eingesetzt werden. Zur besseren Viskositätskontrolle werden vor der Aktivierung 406 g Toluol zugefügt und homogen gerührt. Es wird eine Viskosität von 610 $mm^2/s$ (25°C) erreicht.

Zur Herstellung eines lösemittelfreien verzweigten Siloxancopolymers mischt man nun 227 g des gleichen linearen $\alpha,\omega$-Divinyldimethylpolysiloxans der Kettenlänge $Si_{100}$ zu und entfernt das Toluol bei 100°C unter vermindertem Druck. Man erhält ein klares, farbloses Öl der Viskosität 5 400 $mm^2/s$ (25°C) mit einem Gehalt an Vinyldimethylsiloxyeinheiten von 0,195 mequ./g.

**2. Verwendung der Alkenylgruppen aufweisenden Siloxancopolymere als Antimisting Additive:**

Beispiel 9:

Bei hohem Auftragsgewicht und bestimmten Beschichtungsformulierungen kann die Aerosolbildung bereits bei Maschinengeschwindigkeiten deutlich unter 500 m/min auftreten. Die Anwendung der erfindungsgemäßen verzweigten Siloxancopolymere zur Reduktion der Aerosolbildung erfolgte als Additiv in vernetzbaren Siliconbeschichtungssystemen für den Einsatz in solchen Beschichtungsprozessen.

Als Standardformulierung wurde eine Mischung aus
100 Gew.-teilen eines verzweigten Polysiloxans mit Vinyldimethylsiloxyendgruppen, das eine Viskosität von 420 mPa.s (25°C) und eine Jodzahl von 8,0 aufweist und gemäß Beispiel 3 von US 6,034,225 hergestellt wird,
3,6 Gew.-teile eines linearen Polysiloxans aus Hydrogenmethylsiloxan- und Trimethylsiloxaneinheiten im Molverhältnis 24 : 1,
1,04 Gew.-teile einer 1 Gew.-%igen (bezogen auf elementares Platin) Lösung eines Platin-1,3-Divinyl-1,1,3,3-tetramethyldisiloxan-Komplexes in einem $\alpha,\omega$-Divinyldimethylpolysiloxan mit einer Viskosität von 1000 mPa·s bei 25°C und 0,3 Gew.-teile 1-Ethinylcyclohexanol eingesetzt.

Die erfindungsgemäßen Additive gemäß den in Tabelle 1 angegebenen Herstellungsbeispielen wurden der Standardformulierung gemäß den in Tabelle 1 angegebenen Mengen zugesetzt. Als Vergleich wurde eine Standardformulierung ohne erfindungsgemäßes Additiv eingesetzt. Diese Mischungen wurden zur Papierbeschichtung eingesetzt.

Als Substrat wurde Papier der Fa. Ahlstrom mit der Bezeichnung Glassine Larice Tipo 325 mit 62 $g/m^2$ verwendet. Die Beschichtung erfolgte auf der Pilotbeschichtungsanlage der Fa. Dixon der Modellnummer 1060 mit einem 5-Walzen Auftragswerk, bei 150 m/min. Dabei wurde die Auftragsrolle mit 95% der Papiergeschwindigkeit gefahren. Die Beschichtung wurde im Trockenofen mit 3 m Länge bei 140°C ausgehärtet.

Die Aerosolbildung wurde mit dem Dusttrak Aerosol Monitor Model 8520 bestimmt. Die Probennahme erfolgte zwischen Siliconauftragswalze und Walzenspalt in einem Abstand von 12 cm zur Siliconauftragswalze. Zusätzlich wurde die Aerosolbildung visuell beurteilt und mit den Ziffern 1 - 3 bewertet:

1 keine sichtbare Aerosolbildung
2 schwach sichtbare Aerosolbildung
3 starke Aerosolbildung.

Während der Beschichtungsversuche wurden die maximal angezeigten Aerosolwerte protokolliert. Das Beschichtungsgewicht wurde mittels Röntgenfluoreszenzanalyse in Referenz zu einem geeigneten Standard bestimmt und betrug 2,5 g/m$^2$.
Die Ergebnisse sind in Tabelle 1 zusammengefasst.

Tabelle 1:

| Additiv | Menge Additiv in % | Misting, mg/m$^3$ (Dusttrak) | Misting (visuell) |
|---|---|---|---|
| Beispiel 5 | 4 | 1,5 | 1,5 |
| Beispiel 6 | 4 | 1,0 | 1 |
| Beispiel 7 | 8 | 1,1 | 1 |
| Beispiel 8 | 4 | 1,5 | 1 |
| Vergleich | - | 20 | 3 |

Die Vergleichsversuche zeigen, dass der Zusatz der erfindungsgemäßen verzweigten, vinylfunktionellen Siloxancopolymere als Antimisting Additive die Aerosolbildung vernetzbarer Siliconbeschichtungssysteme in schnellen Beschichtungsprozessen deutlich reduziert.

Beispiel 10:

Die Anwendung der erfindungsgemäßen Alkenylgruppen aufweisenden Siloxancopolymere zur Reduktion der Aerosolbildung erfolgt als Additiv in vernetzbaren Siliconbeschichtungssystemen für den Einsatz in schnellen Beschichtungsprozessen.

Als Standardformulierung wurde eine Mischung aus 100 Gew.-teile eines linearen $\alpha,\omega$-Divinyldimethylpolysiloxans mit einer Viskosität von 300 mPa·s (25°C),
3,1 Gew.-teile eines linearen Polysiloxans aus Hydrogenmethylsiloxan- und Dimethylsiloxaneinheiten im Molverhältnis 2 : 1 mit Trimethylsiloxanendeinheiten und einer Viskosität von 34 mPa·s (25°C),
1,25 Gew.-teile einer 1 Gew.-%igen (bezogen auf elementares Platin) Lösung eines Platin-1,3-Divinyl-1,1,3,3-tetramethyldisiloxan-Komplexes in einem $\alpha,\omega$-Divinyldimethylpolysiloxan mit einer Viskosität von 1000 mPa·s bei 25°C und 0,3 Gew.-teile 1-Ethinylcyclohexanol eingesetzt.

Die erfindungsgemäßen Additive gemäß den in Tabelle 2 angegebenen Herstellungsbeispielen wurden der Standardformulierung gemäß den in Tabelle 2 angegebenen Mengen zugesetzt. Als Vergleich wurde eine Standardformulierung ohne erfindungsgemäßes Additiv eingesetzt. Diese Mischungen wurden zur Papierbeschichtung eingesetzt.

Als Substrat wurde Papier der Fa. Ahlstrom mit der Bezeichnung Glassine Larice Tipo 325 mit 62 g/m$^2$ verwendet. Die Beschichtung erfolgte auf der Beschichtungsanlage "BMB Pilotplant" der Fa. Bachofen & Meier AG mit einem 5 Walzen-Auftragswerk, bei 550 m/min. Dabei wurde die Auftragsrolle mit 95% der Papiergeschwindigkeit gefahren. Die Beschichtung wurde im Trocknungsofen mit 18 m Länge bei 160°C ausgehärtet. Dies entspricht einer Vernetzungszeit von 1,96 Sekunden.

Die Aerosolbildung wurde mit dem Dusttrak Aerosol Monitor Model 8520 bestimmt. Die Probennahme erfolgt zwischen Siliconauftragswalze und Walzenspalt in einem Abstand von 12 cm zur Siliconauftragswalze.
Der Blindwert an Aerosolen vor den Beschichtungsversuchen lag zwischen 0,028 - 0,031 mg/m$^3$. Während der Beschichtungsversuche wurden die minimalen und maximal angezeigten Aerosolwerte protokolliert und der Durchschnitt errechnet. Die durchschnittlich gemessenen Aerosolwerte während der Beschichtungsversuche wurden um den Blindwert von 0,03 mg/m$^3$ korrigiert, um den reinen Effekt der erfindungsgemäßen Antimisting Additive zu ermitteln.

Das Beschichtungsgewicht wurde mittels Röntgenfluoreszenzanalyse in Referenz zu einem geeigneten Standard bestimmt.

Da die Stärke der Aerosolbildung u.a. vom Beschichtungsgewicht abhängig ist, wurden die mittleren berechneten Aerosolwerte auf ein Beschichtungsgewicht von 1 g/m$^2$ zur besseren Vergleichbarkeit normiert.

Der Einfluss der erfindungsgemäßen Antimisting Additive auf die Aushärtung des Beschichtungssystems wurde sofort mittels Migrationstest bestimmt und parallel mittels Extraktion unvernetzter Anteile in MIBK (=Methylisobutylketon).

Der Einfluss der erfindungsgemäßen Antimisting Additive auf die Haftung des Beschichtungssystems zum Substrat wurde mittels Rub-off-Test bestimmt.

Die Testmethoden sind in der Broschüre DEHESIVE® Silicones Testmethoden der Fa. Wacker-Chemie GmbH

beschrieben.
Die Ergebnisse sind in der Tabelle 2 zusammenfasst.

Tabelle 2:

| Additiv | | Misting [mg/$m^3$] | | | mittl.Misting [mg/$m^3$] normiert auf 1,0 g/$m^2$ | Migration | Abrieb | Extrakt [%] in MIBK |
|---|---|---|---|---|---|---|---|---|
| | | min. | max. | mittel | | | | |
| Beisp. 5 | 4 | 0,200 | 0,233 | 0,215 | 0,11 | nein | nein | 4,3 |
| Beisp. 5 | 2 | 0,387 | 0,488 | 0,426 | 0,21 | nein | nein | 4,5 |
| Beisp. 6 | 4 | 0,177 | 0,209 | 0,189 | 0,09 | nein | nein | 5,4 |
| Vergleich | - | 19,47 | 30,17 | 24,27 | 16,51 | nein | nein | 5,0 |

Die Beispiele im Vergleich zum Vergleichsversuch ohne Additiv zeigen, dass der Zusatz der erfindungsgemäßen Antimisting Additive die Aerosolbildung vernetzbarer Siliconbeschichtungssysteme in schnellen Beschichtungsprozessen deutlich reduziert.
Nachteilige Effekte bei Migration und Substrathaftung (Abrieb) werden nicht beobachtet; der Anteil der extrahierbaren Anteile ist im Rahmen der Messgenauigkeit nicht erhöht.

Bespiel 11 und Vergleichsversuch gemäß EP-B 716 115:

Ein wichtiges Kriterium für die einfache Verwendbarkeit von Antimisting Additiven in härtbaren Zusammensetzungen ist deren Mischbarkeit mit diesen Zusammensetzungen.
Um reproduzierbare Ergebnisse bei der Aushärtung auf der Beschichtungsmaschine zu erhalten, ist es von Vorteil, wenn sich das Additiv in der gewünschten Menge ohne größeren Aufwand in der härtbaren Zusammensetzung homogen verteilen lässt und eine klare Formulierung bildet. Hierzu werden 104,4 g der Standardformulierung gemäß Beispiel 10 mit jeweils 10 g der Additive gemäß den Herstellungsbeispielen 1 bis 8 unter Verwendung eines Glasstabes durch mäßiges Rühren gemischt, sodass in wenigen Minuten eine anwendungsfertige Formulierung entsteht. Alle Formulierungen sind homogen, klar und frei von Schlieren.
Zum Vergleich wird nach dem Stand der Technik ein Antimisting Additiv gemäß EP-B 716 115 hergestellt:
Ein Gemisch aus 34 g 2-Methyl-3-buten-2-ol und 190 g eines Allylpolyethers der Formel $CH_2$=CH-$CH_2O$ $(C_2H_4O)_{9.4}H$ wird mit 200 g eines Trimethylsiloxy-Endgruppen aufweisendenen Siloxans aus Hydrogenmethylsiloxan- und Dimethylsiloxaneinheiten (0,30 Gew.-% Aktivwasserstoff, Viskosität 37 $mm^2$/s bei 25°C) gemischt, auf 50°C erwärmt und mit 20 ppm Platin in Form des in Beispiel 10 beschriebenen Platinkatalysators (Karstedt-Katalysator) aktiviert. Die exotherme Reaktion liefert nach 2 Stunden ein klares Produkt mit weniger als 0,002 Gew.-% Aktivwasserstoff und leicht brauner Färbung.
Einrühren von 10 g dieses Produktes in 104,4 g der Standardformulierung gemäß Beispiel 10 liefert ein milchiges Gemisch, das nach 4 Stunden Lagerung starke Phasenseparation zeigt. Auch wenn man nur 5 g dieses Additivs unter starker Scherung mit einem Turrax®-Gerät einmischt, erhält man keine klare Formulierung.

## Patentansprüche

1. Verwendung von Antimisting Additiven in vernetzbaren Siliconbeschichtungszusammensetzungen zur Reduktion der Aerosolbildung, **dadurch gekennzeichnet, dass**
als Antimisting Additive Alkenylgruppen aufweisende Siloxancopolymere herstellbar, indem
in einem ersten Schritt
eine mindestens drei aliphatische Doppelbindungen aufweisende Verbindung (1) der allgemeinen Formel

$$R^2(CR^3=CH_2)_x \qquad (I)$$

wobei $R^2$ einen dreiwertigen oder vierwertigen Kohlenwasserstoffrest, der ein oder mehrere von einander separate Heteroatome ausgewählt aus der Gruppe von Sauerstoff, Silizium und Titan enthalten kann,
$R^3$ ein Wasserstoffatom oder einen Alkylrest und

x 3 oder 4, bedeutet,
mit einem Organosiloxan (2) mit endständigen Si-gebundenen Wasserstoffatomen
in Gegenwart von die Anlagerung von Si-gebundenem Wasserstoff an aliphatische Doppelbindung förderndem Katalysator (3) umgesetzt wird,
wobei das eingesetzte Verhältnis von Si-gebundenem Wasserstoff im Organosiloxan (2) zu aliphatischer Doppelbindung in organischer Verbindung (1) 1,3 bis 10 beträgt,
in einem zweiten Schritt
die so erhaltenen, Si-gebundene Wasserstoffatome aufweisenden Kohlenwasserstoff-Siloxancopolymere mit α, ω-Dialkenylsiloxanpolymer (4)
in Gegenwart von die Anlagerung von Si-gebundenem Wasserstoff an aliphatische Doppelbindung förderndem Katalysator (3) umgesetzt werden,
wobei das eingesetzte Verhältnis von aliphatischer Doppelbindung im α,ω-Dialkenylsiloxanpolymer (4) zu Si-gebundenem Wasserstoff in den Siloxancopolymeren 1,2 bis 10 beträgt, und gegebenenfalls in einem dritten Schritt die so erhaltenen Alkenylgruppen aufweisenden Siloxancopolymere mit Organopolysiloxan (5),
ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden,
eingesetzt werden.

2. Verwendung nach Anspruch 1, **dadurch gekennzeichnet, dass** als Organosiloxan (2) solches der allgemeinen Formel

$$HR_2SiO(SiR_2O)_nSiR_2H \quad (II),$$

wobei R gleiche oder verschiedene, gegebenenfalls halogenierte Kohlenwasserstoffreste mit 1 bis 6 Kohlenstoffatomen je Rest und
n 0 oder eine ganze Zahl bedeutet,
eingesetzt wird.

3. Verwendung nach Anspruch 1 oder 2, **dadurch gekennzeichnet, dass** als organische Verbindung (1) solche eingesetzt wird, bei der $R^2$ einen dreiwertigen Kohlenwasserstoffrest mit 1 bis 25 Kohlenstoffatomen je Rest und x den Wert 3 bedeutet.

4. Verwendung nach Anspruch 1, 2 oder 3, **dadurch gekennzeichnet, dass** als organische Verbindung (1) 1,2,4-Trivinylcyclohexan eingesetzt wird.

5. Verwendung nach einem der Ansprüche 1 bis 4, **dadurch gekennzeichnet, dass** als α,ω-Dialkenylsiloxanpolymer (4) solches der allgemeinen Formel

$$R^4{}_aR_{3-a}SiO(R_2Si\text{-}R^1\text{-}SiR_2O)_m(R_2SiO)_kSiR^4{}_aR_{3-a} \quad (III)$$

wobei R die oben angegebene Bedeutung hat
$R^1$ einen Alkylenrest mit 2 bis 10 Kohlenstoffatomen je Rest oder einen zweiwertigen Silan- oder Siloxanrest,
$R^4$ ein endständig olefinisch ungesättigter Rest mit 2 bis 10 C-Atomen ist, und
a gleich oder verschieden sein kann und 0 oder 1, durchschnittlich 0,7 bis 1,0 ist,
m gleich 0 oder eine ganze Zahl von 1 bis 10 ist und
k gleich 0 oder eine ganze Zahl von 1 bis 1000 ist, eingesetzt wird.

6. Verwendung nach einem der Ansprüche 1 bis 5, **dadurch gekennzeichnet, dass** als α,ω-Dialkenylsiloxanpolymer (4) α,ω-Divinylpolydimethylsiloxane verwendet werden.

7. Verwendung nach einem der Ansprüche 1 bis 6, **dadurch gekennzeichnet, dass** als vernetzbare Siliconbeschichtungszusammensetzung solche enthaltend

(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren
und gegebenenfalls
(D) Inhibitoren
eingesetzt werden.

**8.** Vernetzbare Siliconbeschichtungszusammensetzung mit reduzierter Aerosolbildung enthaltend

(X) Antimisting Additive nach einem der Ansprüche 1 bis 6 in Mengen von 0,5 bis 10 Gew.-%, bezogen auf das Gesamtgewicht der vernetzbaren Siliconbeschichtungszusammensetzung,
(A) Organopolysiloxane, die Reste mit aliphatischen Kohlenstoff-Kohlenstoff-Mehrfachbindungen aufweisen, der allgemeinen Formel

$$R^6{}_gR^5{}_{3-g}SiO(SiR^5{}_2O)_v(SiR^5R^6O)_wSiR^5{}_{3-g}R^6{}_g \qquad (V)$$

wobei $R^5$ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest bedeutet, $R^6$ einen einwertigen Kohlenwasserstoffrest mit terminaler, aliphatischer Kohlenstoff-Kohlenstoff-Mehrfachbindung mit 2 bis 8 Kohlenstoffatomen je Rest bedeutet,
g 0, 1 oder 2,
v 0 oder eine ganze Zahl von 1 bis 1500 und
w 0 oder eine ganze Zahl von 1 bis 200 ist,
mit der Maßgabe, dass durchschnittlich mindestens 1,5 Reste $R^6$, enthalten sind,
(B) Organosiliciumverbindungen mit Si-gebundenen Wasserstoffatomen
(C) die Anlagerung von Si-gebundenem Wasserstoff an aliphatische Mehrfachbindung fördernde Katalysatoren und gegebenenfalls
(D) Inhibitoren.

**9.** Formkörper hergestellt durch Vernetzung der Zusammensetzungen gemäß Anspruch 8.

**10.** Formkörper gemäß Anspruch 9, **dadurch gekennzeichnet, dass** es sich um Beschichtungen handelt.

**11.** Formkörper gemäß Anspruch 9, **dadurch gekennzeichnet, dass** es sich um klebrige Stoffe abweisende Überzüge handelt.

**12.** Verfahren zur Herstellung von Beschichtungen durch Auftragen von vernetzbaren Zusammensetzungen gemäß Anspruch 8 auf die zu beschichtenden Oberflächen und anschließende Vernetzung der Zusammensetzungen.

**13.** Verfahren zur Herstellung von klebrige Stoffe abweisende Überzüge durch Auftragen von vernetzbaren Zusammensetzungen gemäß Anspruch 8 auf die klebrige Stoffe abweisend zu machenden Oberflächen und anschließende Vernetzung der Zusammensetzungen.

## Claims

**1.** Use of antimisting additives in a crosslinkable silicone coating composition for reducing the formation of aerosol, **characterized in that** it comprises using as antimisting additive alkenyl-functional siloxane copolymers preparable in a first step
by reacting a compound (1) containing at least three aliphatic double bonds, of the general formula

$$R^2(CR^3{=}CH_2)_x \qquad (I)$$

where $R^2$ is a trivalent or tetravalent hydrocarbon radical which can contain one or more heteroatoms which are separate from one another and are selected from the group consisting of oxygen, silicon, and titanium,
$R^3$ is a hydrogen atom or an alkyl radical, and
x is 3 or 4
with an organosiloxane (2) having terminal Si-bonded hydrogen atoms
in the presence of catalyst (3) which promotes the addition of Si-bonded hydrogen onto aliphatic double bond,
the ratio of Si-bonded hydrogen in the organosiloxane (2) to aliphatic double bond in organic compound (1) being from 1.3 to 10,
in a second step
reacting the resulting hydrocarbon-siloxane copolymers, containing Si-bonded hydrogen atoms,
with α,ω-dialkenylsiloxane polymer (4)
in the presence of catalyst (3) which promotes the addition of Si-bonded hydrogen onto aliphatic double bond,
the ratio of aliphatic double bond in the α,ω-dialkenylsiloxane polymer (4) to Si-bonded hydrogen in the siloxane copolymers being from 1.2 to 10,
and if desired, in a third step,
equilibrating the resulting alkenyl-functional siloxane copolymers with organopolysiloxane (5),
selected from the group consisting of linear organopolysiloxanes containing terminal triorganosiloxy groups, linear organopolysiloxanes containing terminal hydroxyl groups, branched organopolysiloxanes optionally containing hydroxyl groups, cyclic organopolysiloxanes, and copolymers comprising diorganosiloxane and monoorganosiloxane units.

2. Use according to Claim 1, **characterized in that** said organosiloxane (2) is of the general formula

$$HR_2SiO(SiR_2O)_nSiR_2H \quad \text{(II)}$$

where R is identical or different, unhalogenated or halogenated hydrocarbon radicals having from 1 to 6 carbon atoms per radical and
n is 0 or an integer.

3. Use according to Claim 1 or 2, **characterized in that** said organic compound (1) is one where $R^2$ is a trivalent hydrocarbon radical having from 1 to 25 carbon atoms per radical and x is 3.

4. Use according to Claim 1, 2 or 3, **characterized in that** said organic compound (1) comprises 1,2,4-trivinylcyclohexane.

5. Use according to any of Claims 1 to 4, **characterized in that** said α,ω-dialkenylsiloxane polymer (4) is of the general formula

$$R^4{}_aR_{3-a}SiO(R_2Si\text{-}R^1\text{-}SiR_2O)_m(R_2SiO)_kSiR^4{}_aR_{3-a} \quad \text{(III)}$$

where R is as defined above,
$R^1$ is an alkylene radical having from 2 to 10 carbon atoms per radical or is a divalent silane or siloxane radical,
$R^4$ is a terminally olefinically unsaturated radical having from 2 to 10 carbon atoms,
a can be identical or different and is 0 or 1, on average from 0.7 to 1.0,
m is 0 or an integer from 1 to 10, and
k is 0 or an integer from 1 to 1000.

6. Use according to any of Claims 1 to 5, **characterized in that** said α,ω-dialkenylsiloxane polymer (4) comprises α , ω-divinylpolydimethylsiloxanes.

7. Use according to any of Claims 1 to 6, **characterized in that** said crosslinkable silicone coating composition comprises

(A) organosilicon compounds having radicals containing aliphatic carbon-carbon multiple bonds,
(B) organosilicon compounds containing Si-bonded hydrogen atoms,

(C) catalysts which promote the addition of Si-bonded hydrogen onto aliphatic multiple bond,
and if desired
(D) inhibitors.

**8.** Crosslinkable silicone coating composition with reduced aerosol formation, comprising

(X) antimisting additives according to any of Claims 1 to 6 in amounts of from 0.5 to 10% by weight, based on the total weight of the crosslinkable silicone coating composition,
(A) organopolysiloxanes having radicals containing aliphatic carbon-carbon multiple bonds, of the general formula

$$R^6{}_gR^5{}_{3-g}SiO\ (SiR^5{}_2O)_v(SiR^5R^6O)_wSiR^5{}_{3-g}R^6{}_g \qquad (V)$$

where $R^5$ is a monovalent, optionally substituted hydrocarbon radical having 1 to 18 carbon atoms per radical and being free from aliphatic carbon-carbon multiple bonds,
$R^6$ is a monovalent hydrocarbon radical with a terminal aliphatic carbon-carbon multiple bond, having 2 to 8 carbon atoms per radical,
g is 0, 1 or 2,
v is 0 or an integer from 1 to 1500 and
w is 0 or an integer from 1 to 200,
with the proviso that on average there are at least 1.5 radicals $R^6$ present,
(B) organosilicon compounds containing Si-bonded hydrogen atoms,
(C) catalysts which promote the addition of Si-bonded hydrogen onto aliphatic multiple bonds,
and if desired
(D) inhibitors.

**9.** Shaped bodies produced by crosslinking the compositions of Claim 8.

**10.** Shaped bodies of Claim 9, **characterized in that** they are coatings.

**11.** Shaped bodies of Claim 9, **characterized in that** they are coatings which repels tacky substances.

**12.** Process for producing coatings by applying crosslinkable compositions according to Claim 8 to the surfaces that are to be coated and then crosslinking the compositions.

**13.** Process for producing coatings which repel tacky substances by applying crosslinkable compositions according to Claim 8 to the surfaces that are to be made repellent to tacky substances and then crosslinking the compositions.

## Revendications

**1.** Utilisation d'additifs anti-buée dans des compositions réticulables de revêtement de silicone pour la réduction de la formation d'aérosol, **caractérisée en ce qu'**on utilise comme additifs anti-buée des copolymères de siloxane présentant des groupements alcényle, pouvant être préparés **en ce que**, dans une première étape, on transforme un composé (1) présentant au moins trois doubles liaisons aliphatiques de formule générale

$$R^2\ (CR^3{=}CH_2)_x \qquad (I)$$

où $R^2$ signifie un radical hydrocarboné trivalent ou tétravalent, qui peut contenir un ou plusieurs hétéroatomes séparés les uns des autres choisis dans le groupe constitué par l'oxygène, le silicium et le titane,
$R^3$ signifie un atome d'hydrogène ou un radical alkyle et
x signifie 3 ou 4
avec un organosiloxane (2) avec des atomes d'hydrogène liés par Si en position terminale,
en présence d'un catalyseur (3) favorisant l'addition d'hydrogène lié par Si sur une double liaison aliphatique, le rapport utilisé d'hydrogène lié par Si dans l'organosiloxane (2) à double liaison aliphatique dans le composé organique (1) étant de 1,3 à 10,
dans une deuxième étape, on transforme les copolymères d'hydrocarbure-siloxane présentant des atomes d'hydrogène liés par Si ainsi obtenus avec un polymère d'α,ω-dialcénylsiloxane (4) en présence d'un catalyseur (3) favorisant l'addition d'hydrogène lié par Si sur une double liaison aliphatique,
le rapport utilisé de double liaison aliphatique dans le polymère d'α,ω-dialcénylsiloxane (4) à hydrogène lié par Si dans les copolymères de siloxane étant de 1,2 à 10 et, le cas échéant, dans une troisième étape, on équilibre les copolymères de siloxane présentant des groupes alcényle ainsi obtenus avec un organopolysiloxane (5) choisi dans le groupe constitué par les organopolysiloxanes linéaires, présentant des groupements triorganosiloxy en position terminale, les organopolysiloxanes linéaires, présentant des groupements hydroxyle en position terminale, les organopolysiloxanes ramifiés, présentant le cas échéant des groupements hydroxyle, les organopolysiloxanes cycliques et les copolymères d'unités diorganosiloxane et monoorganosiloxane.

**2.** Utilisation selon la revendication 1, **caractérisée en ce qu'**on utilise comme organosiloxane (2) un organosiloxane de formule générale

$$HR_2SiO(SiR_2O)_nSiR_2H \quad (II)$$

dans laquelle R signifie des radicaux hydrocarbonés identiques ou différents, le cas échéant halogénés, comprenant 1 à 6 atomes de carbone par radical et
n vaut 0 ou un nombre entier.

**3.** Utilisation selon la revendication 1 ou 2, **caractérisée en ce qu'**on utilise comme composé organique (1) un composé dans lequel $R^2$ signifie un radical hydrocarboné trivalent comprenant 1 à 25 atomes de carbone par radical et x vaut 3.

**4.** Utilisation selon la revendication 1, 2 ou 3, **caractérisée en ce qu'**on utilise comme composé organique (1) le 1,2,4-trivinylcyclohexane.

**5.** Utilisation selon l'une quelconque des revendications 1 à 4, **caractérisée en ce qu'**on utilise comme polymère d'α,ω-dialcénylsiloxane (4) un polymère de formule

$$R^4{}_aR_{3-a}SiO(R_2Si\text{-}R^1\text{-}SiR_2O)_m(R_2SiO)_kSiR^4{}_aR_{3-a} \quad (III)$$

où R a la signification susmentionnée
$R^1$ représente un radical alcényle comprenant 2 à 10 atomes de carbone par radical ou un radical silane ou siloxane divalent,
$R^4$ représente un radical oléfiniquement insaturé en position terminale comprenant 2 à 10 atomes de carbone et
a peut être identique ou différent et vaut 0 ou 1, en moyenne 0,7 à 1,0,
m vaut 0 ou un nombre entier de 1 à 10 et
k vaut 0 ou un nombre entier de 1 à 1000.

**6.** Utilisation selon l'une quelconque des revendications 1 à 5, **caractérisée en ce qu'**on utilise comme polymère d'α,ω-dialcénylsiloxane (4) des α,ω-divinylpolydiméthylsiloxanes.

**7.** Utilisation selon l'une quelconque des revendications 1 à 6, **caractérisée en ce qu'**on utilise comme composition réticulable de revêtement de silicone, une composition contenant

(A) des composés organosiliciés qui présentent des radicaux avec des liaisons multiples aliphatiques carbone-carbone
(B) des composés organosiliciés avec des atomes d'hydrogène liés par Si
(C) des catalyseurs favorisant l'addition d'hydrogène lié par Si sur une liaison multiple aliphatique et, le cas échéant,
(D) des inhibiteurs.

**8.** Composition réticulable de revêtement de silicone avec une formation réduite d'aérosol, contenant

(X) des additifs anti-buée selon l'une quelconque des revendications 1 à 6 en des quantités de 0,5 à 10% en poids par rapport au poids total de la composition réticulable de revêtement de silicone
(A) des organopolysiloxanes, qui présentent des radicaux avec des liaisons multiples aliphatiques carbone-carbone, de formule générale

$$R^6{}_gR^5{}_{3-g}SiO(SiR^5{}_2O)_v(SiR^5R^6O)_wSiR^5{}_{3-g}R^6{}_g \quad (V)$$

où $R^5$ signifie un radical hydrocarboné monovalent, le cas échéant substitué, exempt de liaisons multiples aliphatiques carbone-carbone, comprenant 1 à 18 atomes de carbone par radical
$R^6$ signifie un radical hydrocarboné monovalent comprenant une liaison multiple aliphatique carbone-carbone terminale comprenant 2 à 8 atomes de carbone par radical
g vaut 0, 1 ou 2,
v vaut 0 ou un nombre entier de 1 à 1500 et
w vaut 0 ou un nombre entier de 1 à 200, à condition qu'en moyenne au moins 1,5 radicaux $R^6$ soient contenus
(B) des composés organosiliciés comprenant des atomes d'hydrogène liés par Si
(C) des catalyseurs favorisant l'addition d'hydrogène lié par Si sur des liaisons multiples aliphatiques et le cas échéant
(D) des inhibiteurs.

**9.** Corps façonnés préparés par réticulation des compositions selon la revendication 8.

**10.** Corps façonnés selon la revendication 9, **caractérisés en ce qu'**il s'agit de revêtements.

**11.** Corps façonnés selon la revendication 9, **caractérisés en ce qu'**il s'agit de recouvrements repoussant les substances adhésives.

**12.** Procédé pour la préparation de revêtements par application de compositions réticulables selon la revendication 8 sur les surfaces à revêtir et réticulation consécutive des compositions.

**13.** Procédé pour la préparation de recouvrements repoussant les substances adhésives par l'application de compositions réticulables selon la revendication 8 sur les surfaces à rendre répulsives aux substances adhésives et réticulation consécutive des compositions.